# EUROPÄISCHE PATENTSCHRIFT

(11) **EP 2 055 967 B1**
(45) Veröffentlichungstag und Bekanntmachung des Hinweises auf die Patenterteilung: **14.12.2011**
(21) Anmeldenummer: 09100114.9
(22) Anmeldetag: 05.07.2005
(51) Int. Cl.: F16B 21/06, H05K 5/00, H05K 5/02, E05B 55/00, H01M 2/10

(54) **Batteriepack und Elektrogerät**
Battery pack and electric appliance
Bloc de batterie et appareil électrique

(30) Priorität: 10.09.2004 DE 102004043827
(43) Veröffentlichungstag der Anmeldung: 06.05.2009
(62) Teilanmeldung aus: 05760901.8
(73) Patentinhaber: ROBERT BOSCH GMBH, 70442 Stuttgart (DE)
(72) Erfinder: Rejman, Marcin, 71332 Waiblingen (DE); Matthias, Wolf, 70469 Stuttgart (DE); Roth, Urs, 4534 Flumenthal (CH)

(56) Entgegenhaltungen:
- EP-A- 0 494 505
- DE-U1- 20 116 741
- US-B1- 6 168 881

## Beschreibung

Die Erfindung betrifft einen Batteriepack gemäß dem Oberbegriff des Anspruchs 1 sowie ein Elektrogerät gemäß dem Oberbegriff des Anspruchs 12. Der hier verwendete Begriff Batteriepack soll auch Akkupacks umfassen, die wiederaufladbare Batterien (Akkus) enthalten.

### Stand der Technik

Insbesondere große und schwere handgeführte Elektrowerkzeuge, wie Bohrhämmer oder dergleichen, weisen zur Befestigung eines zur Stromversorgung dienenden Batteriepacks eine Vorrichtung der eingangs genannten Art mit einer als Doppelverriegelung bezeichneten zweistufigen Verriegelung auf. Bei älteren Geräten ist dort in einem Gehäuse des Elektrowerkzeugs ein Riegel vorgesehen, der entgegen der Kraft einer Feder beweglich ist Der Riegel tritt nacheinander mit zwei Rastnuten im Batteriepack in Eingriff, die in Richtung der Relativbewegung während der Anbringung des Batteriepacks hintereinander in einem dem Riegel gegenüber liegenden Teil desselben ausgespart sind. Die vordere Rastnut, mit welcher der Riegel bei der Anbringung des Batteriepacks zuerst in Eingriff tritt, dient dort dazu, den Batteriepack so mit dem Gehäuse des Elektrowerkzeugs zu verbinden, dass er sich ohne eine manuelle Betätigung des Riegels nicht mehr vom Gehäuse lösen kann. Dadurch wird gewährleistet, dass der Batteriepack zum Beispiel zum Transport des Elektrowerkzeugs absturzsicher in dessen Gehäuse fixiert ist, jedoch noch kein Kontakt zwischen den Anschlüssen des Batteriepacks und des Elektrowerkzeugs besteht. Dieser Kontakt wird erst dann hergestellt, wenn der Batteriepack vom Benutzer so weit ins Gehäuse des Elektrowerkzeugs eingeschoben wird, bis der Riegel in die hintere Rastnut eingreift, nachdem er zu Beginn dieser Einschubbewegung selbsttätig aus der vorderen Rastnut ausgerückt worden ist.

Einerseits ist es ein Wunsch der Hersteller von verschiedenen batteriebetriebenen Elektrogeräten, zum einen die Batteriepacks so auszubilden, dass sie sich in allen Geräten verwenden lassen, und zum anderen auch die Geräte im Hinblick auf ihre Schnittstelle zum Batteriepack weitgehend zu standardisieren, indem im Wesentlichen derselbe Verriegelungsmechanismus bei allen Geräten verwendet wird. Andererseits ist zumeist nicht bei allen dieser Geräte eine Doppelverriegelung erwünscht, zum Beispiel weil diese bei Geräten mit kleinen und leichten Batteriepacks nicht benötigt wird oder weil bei einigen Geräten von den Kunden keine Doppelverriegelung erwartet und daher fälschlicherweise bereits beim Eingriff des Riegels oder der Riegel in die vordere Rastnut bzw. Rastnuten vom Zustandekommen eines ordnungsgemäßen Kontakts zwischen dem Elektrogerät oder dem Batteriepack ausgegangen wird.

Aus EP 494 505 A2 ist ein Batteriepack für ein medizinisches Instrument mit einer Verriegelungseinheit bekannt. Die Verriegelungseinheit umfasst einen Rastvorsprung, der von einem Riegel hintergriffen wird.

US 6,168,881 beschreibt einen Verriegelungsmechanismus für ein batteriebetriebenes Elektrowerkzeug. Das Elektrowerkzeug besitzt an der Basis eine Rastausnehmung, in die beim Verriegeln eine Rastnase eingreift.

DE 201 16 741 U1 offenbart ein Akkumulatorpaket, das eine Kupplung zur Ankopplung an ein Elektrowerkzeug aufweist. Die Kupplung weist einen Schwenkhebel mit einer davon hervorstehenden Rastnase auf, die mit einem entsprechend geformten Rastelement am Kupplungselement des Elektrowerkzeugs zusammenwirkt.

### Vorteile der Erfindung

Dort, wo der Riegel einschließlich Betätigungseinrichtung, die im folgenden gemeinsam als Verriegelungsmechanismus bezeichnet werden, in herkömmlicher Weise im Elektrogerät untergebracht ist, während die Ausnehmungen für den Riegel im Batteriepack vorgesehen sind, bietet demgegenüber der erfindungsgemäße Batteriepack mit den im Anspruch 1 genannten Merkmalen und das Elektrogerät mit den im Anspruch 12 genannten Merkmalen den Vorteil, dass bei Verwendung identischer Batteriepacks und eines Verriegelungsmechanismus mit einem in geeigneter Weise ausgebildeten oder positionierten Riegel die Möglichkeit geschaffen wird, wahlweise eine Einzel- oder Doppelverriegelung vorzusehen, oder, zum Beispiel aus Platzgründen, die endgültige Verriegelung wahlweise mit der vorderen oder mit der hinteren Ausnehmung vorzunehmen. Ein weiterer Vorteil besteht darin, dass sich darüber hinaus der Verriegelungsmechanismus, abgesehen vom Riegel selbst oder von seiner Montageposition im Gerät, bei allen Geräten standardisieren lässt.

Mit der erfindungsgemäßen Vorrichtung ist es zum Beispiel möglich, bei einer Kombination von Elektrogerät und Batteriepack der Kontakt zwischen dem Batteriepack und einem Stromkreis eines Verbrauchers des Elektrogeräts erst beim Eingriff des Riegels in die hintere Ausnehmung herzustellen, während er bei einer anderen Kombination von Elektrogerät und Batteriepack bereits beim Eingriff des Riegels in die vordere Ausnehmung hergestellt wird.

Eine unterschiedliche Form der Ausnehmungen wird dadurch erreicht, dass in einer der Ausnehmungen ein Vorsprung vorgesehen wird, vorzugsweise in Form einer die Ausnehmung teilenden Rippe, der den Eingriff eines Riegels mit einer zum Vorsprung komplementären Aussparung, vorzugsweise mit einem die Rippe aufnehmenden Schlitz gestattet, während der Eingriff eines Riegels ohne eine solche Aussparung verhindert wird. Die Aussparungen selbst sind zweckmäßig wie beim Stand der Technik als Rastnuten ausgebildet.

Wenn bei einer Kombination von Elektrogerät und Batteriepack die Möglichkeit einer Doppelverriegelung vorgesehen werden soll, und bei zwei anderen Kombinationen von Elektrogerät und Batteriepack mit Einzelverriegelung die Verriegelung in einem Fall beim Eingriff des Riegels in die vordere Ausnehmung und im anderen Fall beim Eingriff des Riegels in die hintere Ausnehmung hergestellt werden soll, kann gemäß einer bevorzugten Ausgestaltung der Erfindung vorgesehen werden, zwei Ausnehmungen mit unterschiedlicher Form und unterschiedlichen Abmessungen oder zwei gegeneinander versetzte Ausnehmungen mit unterschiedlicher Form oder mit unterschiedlichen Abmessungen miteinander zu kombinieren.

Darüber hinaus ist es auch noch möglich, mehr als zwei in Bewegungsrichtung beim Verriegeln hintereinander angeordnete Ausnehmungen vorzusehen, von denen jede mit dem Riegel eines anderen Elektrogeräts in Eingriff tritt, um die Verriegelung vorzunehmen, wobei jeweils zwei der Ausnehmungen paarweise gemeinsam wirksam sein können, um eine Doppelverriegelung vorzunehmen.

Vorzugsweise sind die Riegel jeweils in den Elektrogeräten und die Ausnehmungen in den Batteriepacks vorgesehen, jedoch ist grundsätzlich auch eine umgekehrte Anordnung möglich.

### Zeichnungen

Die Erfindung wird nachfolgend in zwei Ausführungsbeispielen anhand der zugehörigen Zeichnungen näher erläutert. Es zeigen:
- Fig. 1:: eine Querschnittsansicht eines Teils einer Kombination von einem Elektrogerät und einem Batteriepack mit Doppelverriegelung nach einem teilweisen Einführen des Batteriepacks;
- Fig. 2:: eine Ansicht entsprechend Fig. 1, jedoch nach einem vollständigen Einführen des Batteriepacks;
- Fig. 3:: eine teilweise weggeschnittene auseinandergezogene perspektivi- sche Ansicht von einer Seite des Batteriepacks in Verbindung mit dem Riegel des Elektrogeräts aus Fig. 1 und 2;
- Fig. 4:: eine Ansicht entsprechend Fig. 3, jedoch in Verbindung mit dem Riegel eines Elektrogeräts ohne Doppelverriegelung;
- Fig. 5:: eine vereinfachte Oberseitenansicht eines ähnlichen Batteriepacks in Verbindung mit drei perspektivisch dargestellten Riegeln von verschiedenen Elektrogeräten.

### Beschreibung der Ausführungsbeispiele

Bei der in der Zeichnung nur teilweise dargestellten Kombination von einem Elektrogerät 2, wie beispielsweise einem handgeführten Elektrowerkzeug, und einem als Stromversorgung für das Elektrogerät 2 dienenden Batteriepack 4 weist das Elektrogerät 2 in herkömmlicher Weise einen Sitz 6 für den Batteriepack 4 auf, in den dieser in Richtung des Pfeils A eingeschoben wird, um ihn einerseits sicher mit dem Elektrogerät 2 zu verbinden und andererseits eine elektrisch leitende Verbindung zwischen Anschlusskontakten 8 von Batterien des Batteriepacks 4 und einem Stromkreis des Verbrauchers (nicht dargestellt) des Elektrogeräts 2 herzustellen.

Um den Batteriepack 4 im Sitz 6 festzuhalten, weist ein Gehäuse 10 des Elektrogeräts 2 einen Verriegelungsmechanismus 12 auf, der beim Einführen des Batteriepacks 4 in den Sitz 6 eine Verriegelung desselben mit dem Gehäuse 10 bewirkt. Der Verriegelungsmechanismus 12 umfasst eine Mehrzahl von Riegeln, von denen bei 14 nur einer dargestellt ist. Der Riegel 14 ist starr mit einem nach außen über das Gehäuse 10 überstehenden Betätigungsschieber 16 verbunden und entgegen der Kraft einer Feder 18 in einer im Gehäuse 10 ausgesparten Führung 20 verschiebbar. Die Führung 20 ist in Bewegungsrichtung des Riegels 14 zum Sitz 6 hin offen, so dass ein freies Stirnende 22 des Riegels 14 bei unbetätigtem Schieber 16 in den Sitz 6 übersteht. Das Stirnende 22 ist an seiner der Öffnung des Sitzes 6 zugewandten Seite angeschrägt, so dass beim Einführen des Batteriepacks 4 der Riegel 14 entgegen der Kraft der Feder 18 in die Führung 20 gedrückt wird.

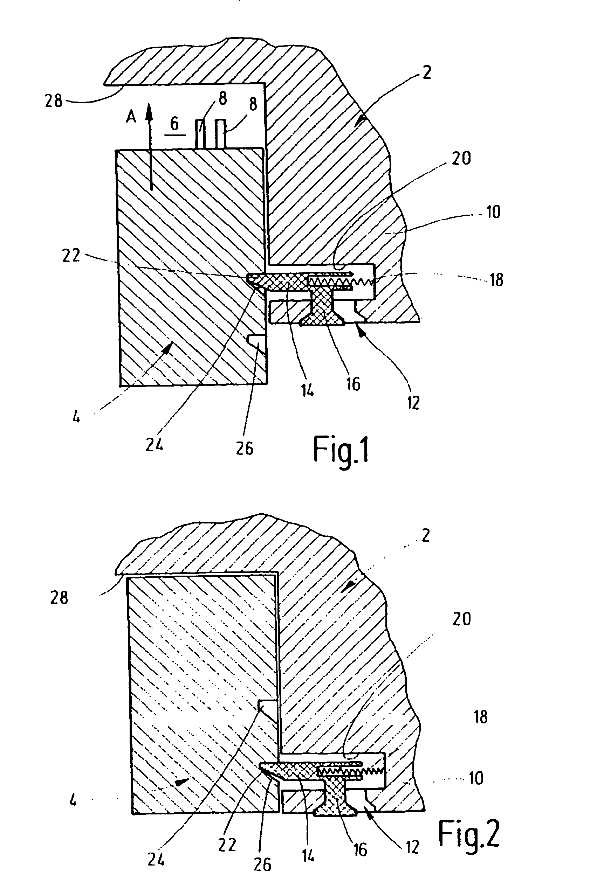

Außerdem ist der Batteriepack 4 in seiner der Führung 20 zugewandten Seite mit zwei Rastnuten 24 und 26 versehen, in die das Stirnende 22 des Riegels 14 nacheinander selbsttätig eingreift, wenn der Batteriepack 4 beim Einführen in den Sitz 6 die in Fig. 1 bzw. die in Fig. 2 dargestellte Stellung erreicht

Die vordere Rastnut 24, in Bewegungsrichtung des Batteriepacks 4 beim Einführen bzw. Verriegeln gesehen, dient dazu, den Batteriepack 4 in der in Fig. 1 dargestellten Stellung mit dem Gehäuse 10 zu verriegeln, um zum Beispiel beim Transport ein Abstürzen des Batteriepacks 4 zu verhindern. In dieser Stellung greifen die Anschlusskontakte 8 des Batteriepacks 4 noch nicht in zugehörige, in einem Boden 28 des Sitzes 6 vorgesehene Aufnahmebuchsen (nicht sichtbar) des Elektrogeräts 2 ein, so dass noch keine elektrische Verbindung zwischen den Batterien des Batteriepacks 4 und dem Stromkreis des Verbrauchers des Elektrogeräts 2 besteht. Die hintere Rastnut 26 dient dazu, den Batteriepack 4 in der in Fig. 2 dargestellten Stellung mit dem Gehäuse 10 zu verriegeln, wo durch den Eingriff der Anschlusskontakte 8 in die Aufnahmebuchsen des Elektrogeräts 2 ein elektrischer Kontakt zwischen den Batterien und dem Stromkreis des Elektrogeräts 2 vorhanden ist. Die beiden Nuten 24 und 26 weisen eine an die Querschnittsform des vorderen Stirnendes 22 des Riegels 14 angepasste Querschnittsform auf und sind etwas breiter als der Riegel 14.

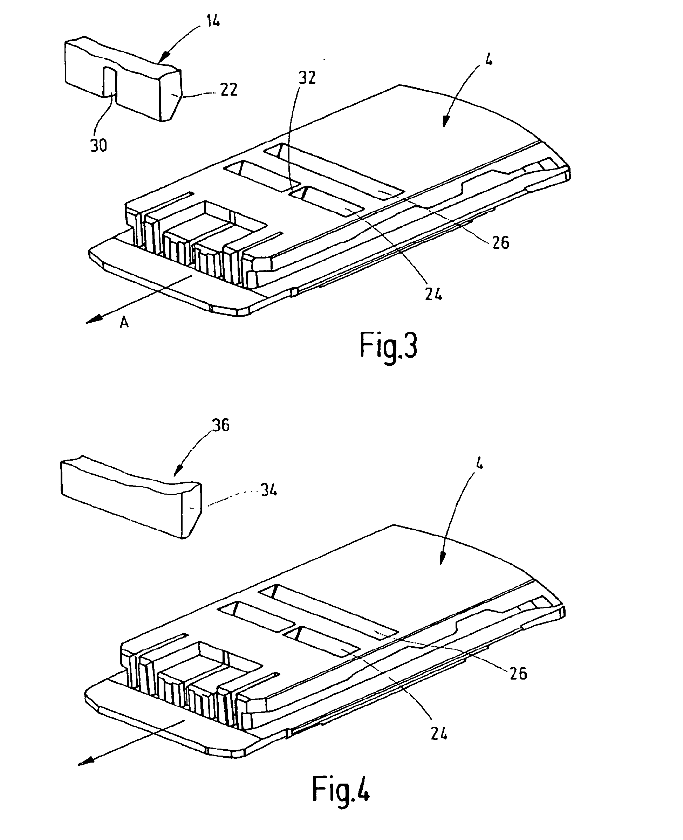

Wie am besten in Fig. 3 dargestellt, ist das mit den Nuten 24, 26 in Eingriff tretende Stirnende 22 des Riegels 14 mit einem mittigen Schlitz 30 versehen, der sich mit gleichbleibenden Querschnittsabmessungen in Bewegungsrichtung des Batteriepacks 4 durch das Stirnende 22 erstreckt. Von den beiden Nuten 24 und 26 erstreckt sich die hintere Nut 26 mit gleichbleibenden Querschnittsabmessungen über ihre gesamte Breite, während die vordere Nut 24 mit gleicher Breite in ihrer Mitte durch eine in Bewegungsrichtung des Batteriepacks verlaufende Rippe 32 unterbrochen ist. Die Rippe 32 liegt dem Schlitz 30 im Riegel 14 gegenüber und ist etwas schmaler als dieser, so dass das Stirnende 22 des Riegels 14 ungehindert sowohl in die erste und in die zweite Nut 24, 26 eingreifen kann, um die unter Bezugnahme auf Fig. 1 und 2 beschriebene Doppelverriegelung zwischen dem Elektrogerät 2 und dem Batteriepack 4 zu ermöglichen.

Während der in Fig. 4 dargestellte Batteriepack 4 mit dem Batteriepack aus den Figuren 1 bis 3 identisch ist, ist dort das vordere Stirnende 34 eines Riegels 36 eines ansonsten gleich oder ähnlich aufgebauten Verriegelungsmechanismus 12 eines anderen Elektrogeräts (nicht dargestellt) nicht mit dem Schlitz 30 versehen, so dass es sich über die vordere Nut 24 hinwegbewegt und erst mit der hinteren Nut 26 in Eingriff tritt. Die Verriegelung zwischen dem Batteriepack 4 erfolgt daher in Form einer Einzelverriegelung, bei der eine mechanische Verriegelung erst zusammen mit dem elektrischen Kontakt in der in Fig. 2 dargestellten Stellung des Batteriepacks 4 hergestellt wird.

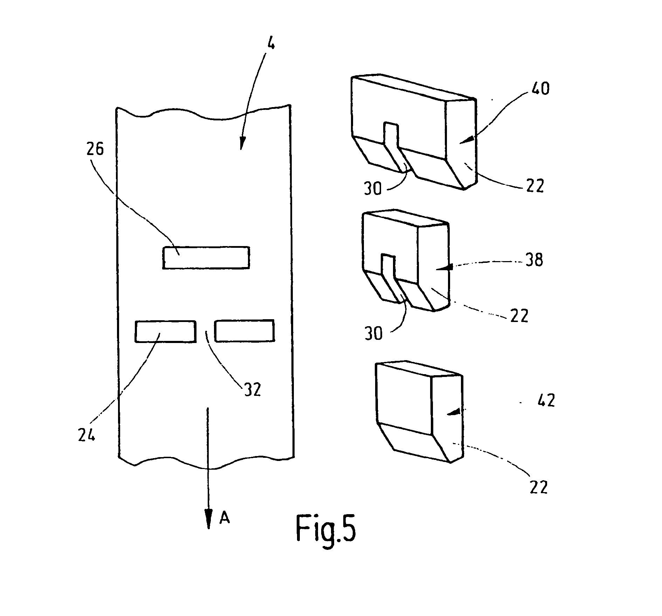

Im Unterschied zu dem zuvor beschriebenen Batteriepack 4 weisen die beiden Nuten 24 und 26 des in Fig. 5 schematisch in Draufsicht dargestellten Batteriepacks 4 zusätzlich quer zu dessen Bewegungsrichtung eine unterschiedliche Länge auf, wobei die hintere Nut 26 kürzer ist als die durch die Rippe 32 unterbrochene vordere Nut 24. Dadurch wird erreicht, dass der Verriegelungsmechanismus 12 eines Elektrogeräts 2 zum Zweck einer Doppelverriegelung mit beiden Nuten 24 und 26 in Eingriff tritt, wenn, wie bei dem mittleren Riegel 38 in Fig. 5, das vordere Stirnende 22 des Riegels 38 etwas schmaler als die Nut 26 ist und einen der Rippe 32 der Nut 24 gegenüberliegenden Schlitz 30 zur Aufnahme der Rippe 32 aufweist. Wenn hingegen wie bei dem oberen Riegel 40 in Fig. 5 das vordere Stirnende 22 breiter als die Nut 26 ist und einen der Rippe 30 der Nut 24 gegenüberliegenden Schlitz 28 aufweist, tritt der Riegel nur mit der vorderen Nut 24 in Eingriff, während er nur mit der hinteren Nut 26 in Eingriff tritt, wenn sein vorderes Stirnende 22 wie bei dem unteren Riegel 42 in Fig. 5 etwas schmaler ist als die Nut 26, jedoch nicht mit eine Schlitz 28 versehen ist. In beiden zuletzt genannten Fällen wird beim Eingriff des Riegels 40 bzw. 42 außer der mechanischen Verriegelung auch der elektrische Kontakt zwischen den Batterien des Batteriepacks 4 und dem Stromkreis des Verbrauchers des Elektrogeräts hergestellt

## Patentansprüche

1. Batteriepack zum Verriegeln mit einem Elektrogerät, insbesondere einem Elektrowerkzeug, das einen beweglichen Riegel umfasst, wobei der Batteriepack mindestens zwei, in Einschubrichtung des Batteriepacks in das Elektrogerät beim Verriegeln hintereinander im Batteriepack angeordnete Ausnehmungen (24, 26) aufweist, welche als Rastnuten ausgebildet sind, wobei die Ausnehmungen (24, 26) unterschiedlich geformt oder unterschiedlich bemessen oder quer zur Bewegungsrichtung gegeneinander versetzt sind, **dadurch gekennzeichnet, dass** in eine der Ausnehmungen (24) ein Vorsprung (32) ragt, der den Eingriff eines Riegels (14; 38; 40) mit einer den Vorsprung (32) aufnehmenden Aussparung (30) gestattet und den Eingriff eines Riegels (36; 42) ohne eine solche Aussparung (30) verhindert.

2. Batteriepack nach Anspruch 1, **dadurch gekennzeichnet, dass** der Vorsprung eine Rippe (32) in der Ausnehmung (24) und die Aussparung ein Schlitz (30) im Riegel (14; 38; 40) ist.

3. Batteriepack nach Anspruch 2, **dadurch gekennzeichnet, dass** die Rippe (32) die Ausnehmung (24) teilt.

4. Batteriepack nach einem der vorangehenden Ansprüche, **dadurch gekennzeichnet, dass** die Ausnehmungen (24, 26) unterschiedlich geformt und unterschiedlich bemessen sind.

5. Batteriepack nach einem der vorangehenden Ansprüche, **dadurch gekennzeichnet, dass** die Ausnehmungen unterschiedlich geformt und gegeneinander versetzt sind.

6. Batteriepack nach einem der vorangehenden Ansprüche, **dadurch gekennzeichnet, dass** die Ausnehmungen unterschiedlich bemessen und gegeneinander versetzt sind.

7. Batteriepack nach einem der vorangehenden Ansprüche, **dadurch gekennzeichnet, dass** beim Verriegeln mit einem Elektrogerät ein Riegel des Elektrogeräts nur mit der vorderen Ausnehmung (24) in Eingriff bringbar ist.

8. Batteriepack nach einem der Ansprüche 1 bis 6, **dadurch gekennzeichnet, dass** beim Verriegeln mit einem Elektrogerät ein Riegel des Elektrogeräts nur mit der hinteren Ausnehmung (26) in Eingriff bringbar ist.

9. Batteriepack nach einem der Ansprüche 1 bis 6, **dadurch gekennzeichnet, dass** beim Verriegeln mit einem Elektrogerät ein Riegel des Elektrogeräts nacheinander zuerst in der vorderen Ausnehmung (24) und dann in der hinteren Ausnehmung (26) in Eingriff bringbar ist.

10. Batteriepack nach einem der vorangehenden Ansprüche, **dadurch gekennzeichnet, dass** beim Verriegeln mit einem Elektrogerät der Kontakt zwischen Batterien des Batteriepacks und einem Stromkreis eines Verbrauchers des Elektrogeräts beim Eingriff eines Riegels des Elektrogeräts in die hintere Ausnehmung (26) herstellbar ist.

11. Batteriepack nach einem der Ansprüche 1 bis 9, **dadurch gekennzeichnet, dass** beim Verriegeln mit einem Elektrogerät der Kontakt zwischen Batterien des Batteriepacks und einem Stromkreis eines Verbrauchers des Elektrogeräts beim Eingriff eines Riegels des Elektrogeräts in die vordere Ausnehmung (26) herstellbar ist.

12. Elektrogerät, insbesondere Elektrowerkzeug, zum Verriegeln mit einem Batteriepack, der einen beweglichen Riegel umfasst, wobei das Elektrogerät mindestens zwei, in Einschubrichtung des Batteriepacks in das Elektrogerät beim Verriegeln hintereinander im Elektrogerät angeordnete Ausnehmungen (24, 26) aufweist, welche als Rastnuten ausgebildet sind, wobei die Ausnehmungen (24, 26) unterschiedlich geformt oder unterschiedlich bemessen oder quer zur Bewegungsrichtung gegeneinander versetzt sind, **dadurch gekennzeichnet, dass** in eine der Ausnehmungen (24) ein Vorsprung (32) ragt, der den Eingriff eines Riegels (14; 38; 40) mit einer den Vorsprung (32) aufnehmenden Aussparung (30) gestattet und den Eingriff eines Riegels (36; 42) ohne eine solche Aussparung (30) verhindert.

13. Elektrogerät nach Anspruch 13, **dadurch gekennzeichnet, dass** der Vorsprung eine Rippe (32) in der Ausnehmung (24) und die Aussparung ein Schlitz (30) im Riegel (14; 38; 40) ist.

14. Elektrogerät nach Anspruch 13, **dadurch gekennzeichnet, dass** die Rippe (32) die Ausnehmung (24) teilt.

15. Elektrogerät nach einem der Ansprüche 12 bis 14, **dadurch gekennzeichnet, dass** die Ausnehmungen (24, 26) unterschiedlich geformt und unterschiedlich bemessen sind.

16. Elektrogerät nach einem der Ansprüche 12 bis 15, **dadurch gekennzeichnet, dass** die Ausnehmungen unterschiedlich geformt und gegeneinander versetzt sind.

17. Elektrogerät nach einem der Ansprüche 12 bis 16, **dadurch gekennzeichnet, dass** die Ausnehmungen unterschiedlich bemessen und gegeneinander versetzt sind.

18. Elektrogerät nach einem der Ansprüche 12 bis 17, **dadurch gekennzeichnet, dass** beim Verriegeln mit einem Batteriepack ein Riegel des Batteriepacks nur mit der vorderen Ausnehmung (24) in Eingriff bringbar ist.

19. Elektrogerät nach einem der Ansprüche 12 bis 17, **dadurch gekennzeichnet, dass** beim Verriegeln mit einem Batteriepack ein Riegel des Batteriepacks nur mit der hinteren Ausnehmung (26) in Eingriff bringbar ist.

20. Elektrogerät nach einem der Ansprüche 12 bis 17, **dadurch gekennzeichnet, dass** beim Verriegeln mit einem Batteriepack ein Riegel des Batteriepacks nacheinander zuerst in der vorderen Ausnehmung (24) und dann in der hinteren Ausnehmung (26) in Eingriff bringbar ist.

21. Elektrogerät nach einem der Ansprüche 12 bis 20, **dadurch gekennzeichnet, dass** beim Verriegeln mit einem Batteriepack der Kontakt zwischen Batterien des Batteriepacks und einem Stromkreis eines Verbrauchers des Elektrogeräts beim Eingriff eines Riegels des Batteriepacks in die hintere Ausnehmung (26) herstellbar ist.

22. Elektrogerät nach einem der Ansprüche 12 bis 20, **dadurch gekennzeichnet, dass** beim Verriegeln mit einem Batteriepack der Kontakt zwischen Batterien des Batteriepacks und einem Stromkreis eines Verbrauchers des Elektrogeräts beim Eingriff eines Riegels des Batteriepacks in die vordere Ausnehmung (26) herstellbar ist.

## Claims

1. Battery pack for locking to an electrical appliance, in particular to an electric tool, which has a moving bolt, with the battery pack having at least two recesses (24, 26), which are arranged one behind the other in the battery pack during locking in the insertion direction of the battery pack into the electrical appliance, which recesses (24, 26) are in the form of latching grooves, with the recesses (24, 26) having different shapes, having different dimensions or being offset with respect to one another transversely with respect to the movement direction, **characterized in that** a projection (32) projects into one of the recesses (24), which allows a bolt (14; 38; 40) to engage with a cutout (30) which holds the projection (32), and prevents a bolt (36; 42) from engaging without a cutout (30) such as this.

2. Battery pack according to Claim 1, **characterized in that** the projection is a rib (32) in the recess (24), and the cutout is a slot (30) in the bolt (14; 38; 40).

3. Battery pack according to Claim 2, **characterized in that** the rib (32) splits the recess (24).

4. Battery pack according to one of the preceding claims, **characterized in that** the recesses (24, 26) have different shapes and different dimensions.

5. Battery pack according to one of the preceding claims, **characterized in that** the recesses have different shapes and are offset with respect to one another.

6. Battery pack according to one of the preceding claims, **characterized in that** the recesses have different dimensions and are offset with respect to one another.

7. Battery pack according to one of the preceding claims, **characterized in that**, during locking to an electrical appliance, a bolt on the electrical appliance can be engaged only with the front recess (24).

8. Battery pack according to one of Claims 1 to 6, **characterized in that**, during locking to an electrical appliance, a bolt on the electrical appliance can be engaged only with the rear recess (26).

9. Battery pack according to one of Claims 1 to 6, **characterized in that**, during locking to an electrical appliance, a bolt on the electrical appliance can be engaged successively firstly in the front recess (24) and then in the rear recess (26).

10. Battery pack according to one of the preceding claims, **characterized in that** during locking to an electrical appliance, the contact between batteries in the battery pack and a circuit of a load of the electrical appliance can be made during engagement of a bolt on the electrical appliance in the rear recess (26).

11. Battery pack according to one of Claims 1 to 9, **characterized in that**, during locking to an electrical appliance, the contact between batteries in the battery pack and a circuit of a load of the electrical appliance can be made during engagement of a bolt on the electrical appliance in the front recess (26).

12. Electrical appliance, in particular an electric tool, for locking to a battery pack, which has a moving bolt with the electrical appliance having at least two recesses (24, 26), which are arranged one behind the other in the electrical appliance during locking in the insertion direction of the battery pack into the electrical appliance, which recesses (24, 26) are in the form of latching grooves, with the recesses (24, 26) having different shapes, having different dimensions or being offset with respect to one another transversely with respect to the movement direction, **characterized in that** a projection (32) projects into one of the recesses (24), which allows a bolt (14; 38; 40) to engage with a cutout (30) which holds the projection (32), and prevents a bolt (36; 42) from engaging without a cutout (30) such as this.

13. Electrical appliance according to Claim 13, **characterized in that** the projection is a rib (32) in the recess (24) and the cutout is a slot (30) in the bolt (14; 38; 40).

14. Electrical appliance according to Claim 13, **characterized in that** the rib (32) splits the recess (24).

15. Electrical appliance according to one of Claims 12 to 14, **characterized in that** the recesses (24, 26) have different shapes and different dimensions.

16. Electrical appliance according to one of Claims 12 to 15, **characterized in that** the recesses have different shapes and are offset with respect to one another.

17. Electrical appliance according to one of Claims 12 to 16, **characterized in that** the recesses have different dimensions and are offset with respect to one another.

18. Electrical appliance according to one of Claims 12 to 17, **characterized in that**, during locking to a battery pack, a bolt on the battery pack can be engaged only with the front recess (24).

19. Electrical appliance according to one of Claims 12 to 17, **characterized in that**, during locking to a battery pack, a bolt on the battery pack can be engaged only with the rear recess (26).

20. Electrical appliance according to one of Claims 12 to 17, **characterized in that**, during locking to a battery pack, a bolt on the battery pack can be engaged successively firstly in the front recess (24) and then in the rear recess (26).

21. Electrical appliance according to one of Claims 12 to 20, **characterized in that** during locking to a battery pack, the contact between batteries in the battery pack and a circuit of a load of the electrical appliance can be made during engagement of a bolt on the battery pack in the rear recess (26).

22. Electrical appliance according to one of Claims 12 to 20, **characterized in that**, during locking to a battery pack, the contact between batteries in the battery pack and a circuit of a load of the electrical appliance can be made during engagement of a bolt on the battery pack in the front recess (26).

## Revendications

1. Pack batterie à verrouiller sur un appareil électrique, notamment un outil électrique, qui comprend un pêne mobile, dans lequel le pack batterie présente au moins deux évidements (24, 26), disposés les uns derrière les autres dans le pack batterie dans la direction d'insertion du pack batterie dans l'appareil électrique lors du verrouillage, qui sont réalisés comme des rainures d'encliquetage, dans lequel les évidements (24, 26) sont façonnés différemment ou dimensionnés différemment ou sont décalés les uns par rapport aux autres transversalement à la direction de mouvement, **caractérisé en ce qu'**une protubérance (32) saille dans un des évidements (24), laquelle protubérance permet la mise en prise d'un pêne (14; 38; 40) avec une cavité (30) recevant la protubérance (32) et empêche la mise en prise d'un pêne (36; 42) sans une telle cavité (30).

2. Pack batterie selon la revendication 1, **caractérisé en ce que** la protubérance est une nervure (32) dans l'évidement (24) et la cavité est une fente (30) dans le pêne (14; 38; 40).

3. Pack batterie selon la revendication 2, **caractérisé en ce que** la nervure (32) divise l'évidement (24).

4. Pack batterie selon une des revendications précédentes, **caractérisé en ce que** les évidements (24, 26) sont façonnés différemment et dimensionnés différemment.

5. Pack batterie selon une des revendications précédentes, **caractérisé en ce que** les évidements sont façonnés différemment et décalés les uns par rapport aux autres.

6. Pack batterie selon une des revendications précédentes, **caractérisé en ce que** les évidements sont dimensionnés différemment et décalés les uns par rapport aux autres.

7. Pack batterie selon une des revendications précédentes, **caractérisé en ce que** lors du verrouillage sur un appareil électrique, un pêne de l'appareil électrique peut être mis en prise seulement avec l'évidement avant (24).

8. Pack batterie selon une des revendications 1 à 6, **caractérisé en ce que** lors du verrouillage sur un appareil électrique, un pêne de l'appareil électrique peut être mis en prise seulement avec l'évidement arrière (26).

9. Pack batterie selon une des revendications 1 à 6, **caractérisé en ce que** lors du verrouillage sur un appareil électrique, un pêne de l'appareil électrique peut être mis en prise successivement d'abord dans l'évidement avant (24), puis dans l'évidement arrière (26).

10. Pack batterie selon une des revendications précédentes, **caractérisé en ce que** lors du verrouillage sur un appareil électrique le contact entre les piles du pack batterie et un circuit électrique d'un consommateur de l'appareil électrique peut être établi lors de la mise en prise d'un pêne de l'appareil électrique dans l'évidement arrière (26).

11. Pack batterie selon une des revendications 1 à 9, **caractérisé en ce que** lors du verrouillage sur un appareil électrique le contact entre les piles du pack batterie et un circuit électrique d'un consommateur de l'appareil électrique peut être établi lors de la mise en prise d'un pêne de l'appareil électrique dans l'évidement avant (26).

12. Appareil électrique, notamment outil électrique, à verrouiller sur un pack batterie, qui comprend un pêne mobile, dans lequel l'appareil électrique présente au moins deux évidements (24, 26), disposés les uns derrière les autres dans l'appareil électrique dans la direction d'insertion du pack batterie dans l'appareil électrique lors du verrouillage, qui sont réalisés comme des rainures d'encliquetage, dans lequel les évidements (24, 26) sont façonnés différemment ou dimensionnés différemment ou sont décalés les uns par rapport aux autres transversalement à la direction de mouvement, **caractérisé en ce qu'**une protubérance (32) saille dans un des évidements (24), laquelle protubérance permet la mise en prise d'un pêne (14; 38; 40) avec une cavité (30) recevant la protubérance (32) et empêche la mise en prise d'un pêne (36; 42) sans une telle cavité (30).

13. Appareil électrique selon la revendication 13, **caractérisé en ce que** la protubérance est une nervure (32) dans l'évidement (24) et la cavité est une fente (30) dans le pêne (14; 38; 40).

14. Appareil électrique selon la revendication 13, **caractérisé en ce que** la nervure (32) divise l'évidement (24).

15. Appareil électrique selon une des revendications 12 à 14, **caractérisé en ce que** les évidements (24, 26) sont façonnés différemment et dimensionnés différemment.

16. Appareil électrique selon une des revendications 12 à 15, **caractérisé en ce que** les évidements sont façonnés différemment et décalés les uns par rapport aux autres.

17. Appareil électrique selon une des revendications 12 à 16, **caractérisé en ce que** les évidements sont dimensionnés différemment et décalés les uns par rapport aux autres.

18. Appareil électrique selon une des revendications 12 à 17, **caractérisé en ce que** lors du verrouillage sur un pack batterie, un pêne du pack batterie peut être mis en prise seulement avec l'évidement avant (24).

19. Appareil électrique selon une des revendications 12 à 17, **caractérisé en ce que** lors du verrouillage sur un pack batterie, un pêne du pack batterie peut être mis en prise seulement avec l'évidement arrière (26).

20. Appareil électrique selon une des revendications 12 à 17, **caractérisé en ce que** lors du verrouillage sur un pack batterie, un pêne du pack batterie peut être mis en prise successivement d'abord dans l'évidement avant (24), puis dans l'évidement arrière (26).

21. Appareil électrique selon une des revendications 12 à 20, **caractérisé en ce que** lors du verrouillage sur un pack batterie le contact entre les piles du pack batterie et un circuit électrique d'un consommateur de l'appareil électrique peut être établi lors de la mise en prise d'un pêne du pack batterie dans l'évidement arrière (26).

22. Appareil électrique selon une des revendications 12 à 20, **caractérisé en ce que** lors du verrouillage sur un pack batterie le contact entre les piles du pack batterie et un circuit électrique d'un consommateur de l'appareil électrique peut être établi lors de la mise en prise d'un pêne du pack batterie dans l'évidement avant (26).
